# EUROPÄISCHE PATENTANMELDUNG

(11) **EP 4 513 136 A1**
(43) Veröffentlichungstag der Anmeldung: **26.02.2025**
(21) Anmeldenummer: 24195670.5
(22) Anmeldetag: 21.08.2024
(51) Int. Cl.: G01B 11/06, G01S 7/02, G01N 21/89, G01N 22/02

(54) **VERFAHREN UND RADAR-MESSVORRICHTUNG ZUR DETEKTION VON UNREGELMÄSSIGKEITEN IN MESSOBJEKTEN**

(30) Priorität: 23.08.2023 DE 102023122556; 19.09.2023 DE 102023125354
(71) Anmelder: CiTEX Holding GmbH, 49324 Melle (DE)
(72) Erfinder: Dr. Thiel, Marius, 49088 Osnabrück (DE); Dr. Eggert, Juliane, 49088 Osnabrück (DE)
(74) Vertreter: Bremer, Ulrich

(57) **Zusammenfassung**

Die Erfindung betrifft ein Verfahren und eine Radar-Messvorrichtung zur Detektion von Unregelmäßigkeiten in Messobjekten, insbesondere Extrusionsprodukten (2), wobei
frequenzmodulierte erste Radarstrahlung (8) mit einer ersten Polarisation (P1) erzeugt wird und entlang einer optischen Achse (A) auf ein Messobjekt (2) eingestrahlt wird und
von dem Messobjekt (2) reflektierte und/oder transmittierte frequenzmodulierte zweite Radarstrahlung (8a) mit zweiter Polarisation (P2) detektiert wird, und
aus einem Vergleich der zweiten Polarisation (P2) mit der ersten Polarisation (P1) Unregelmäßigkeiten in dem Messobjekt (2) ermittelt werden. Hierbei kann insbesondere eine Änderung des Verhältnisses der Strahlung in unterschiedlichen Polarisationen bewertet werden.

## Beschreibung

Die Erfindung betrifft ein Verfahren und eine Radar-Messvorrichtung zur Detektion von Unregelmäßigkeiten in Messobjekten, insbesondere Extrusionsprodukten. Messobjekte können unterschiedliche Unregelmäßigkeiten aufweisen. Bei der Extrusion von Kunststoffprodukten können Unregelmäßigkeiten im Extrusionsprodukt auftreten, z.B. Defekte, Material- und Oberflächenveränderungen, Materialspannungen oder Einschlüsse, z.B. Lufteinschlüsse oder Verunreinigungen, die zu einer Beeinträchtigung des Extrusionsproduktes führen können. Weiterhin können Unregelmäßigkeiten auch beim Abkühlen des Extrusionsproduktes auftreten, z.B. durch Ausbilden von Spannungen im Material oder an der Oberfläche.

Hierzu kann ein Messobjekt, z.B. Extrusionsprodukt, zum einen optisch z.B. mittels einer Kamera bewertet werden. Weiterhin sind THz-Messverfahren und THz-Messvorrichtungen bekannt, bei denen zunächst die Schichtdicke des Messobjektes ermittelt wird, und weiterhin durch Streustrahlung im Messsignal auf Unregelmäßigkeiten, z.B. Lunker, geschlossen werden kann. Kleinere Änderungen, z.B. auch Materialspannungen, können hierdurch jedoch nicht ohne Weiteres ermittelt werden.

Die DE 10 2020 123 992 A1 beschreibt eine THz-Messvorichtung und ein entsprechendes Messverfahren zur Vermessung von Prüfobjekten, insbesondere Rohren, bei denen THz-Transceiver einander gegenüberliegend mit gleicher optischer Achse angeordnet sind und Strahlung in unterschiedlichen Polarisationsebenen ausgeben, wobei ergänzend Reflektoren zum selektiven Reflektieren der unterschiedlichen Polarisationen vorgesehen sind, so dass zwei Messvorrichtungen auf einer gemeinsamen Achse angeordnet sind und sich gegenseitig nicht beeinflussen.

Die US 2022/0026372 A1 zeigt ein Verfahren zum Detektoren von Defekten in stirnseitigen Schweißverbindungen von Rohren mittels gepulster Terahertz-Strahlung. Hierbei wird gepulste THz-Strahlung von einem Transmitter in den Bereich der Schweißverbindung eingestrahlt und die reflektierte gepulste THz-Strahlung von einem Receiver detektiert, wobei vor dem Transmitter und dem Receiver Polarisationsfilter angeordnet werden können, um Spannungen in dem Rohr nachzuweisen.

Der Erfindung liegt die Aufgabe zugrunde, ein Verfahren und eine Radar-Messvorrichtung zur Detektion von Unregelmäßigkeiten zu schaffen, die mit geringem Aufwand eine Ermittlung von Unregelmäßigkeiten in Messobjekten ermöglichen.

Diese Aufgabe wird durch ein Verfahren und eine Radar- Messvorrichtung nach den unabhängigen Ansprüchen gelöst. Weiterhin sind eine Messanordnung aus der Radar-Messvorrichtung und dem Messobjekt, sowie ein Verfahren zum Herstellen eines Extrusionsproduktes unter Einsatz des Messverfahrens und/oder der Radar-Messvorrichtung vorgesehen. Die Unteransprüche beschreiben bevorzugte Weiterbildungen.
Somit wird ein Verfahren zur Detektion von Unregelmäßigkeiten in Messobjekten geschaffen, bei dem frequenzmodulierte erste Radarstrahlung, insbesondere FMCW-Radarstrahlung, mit einer ersten Polarisation insbesondere zunächst erzeugt wird und entlang einer optischen Achse auf ein Messobjekt eingestrahlt wird, wobei das Messobjekt für die Radarstrahlung zumindest teilweise durchlässig ist, z.B. aus Kunststoff oder Gummi gefertigt ist, und von dem Messobjekt reflektierte und/oder transmittierte frequenzmodulierte zweite Radarstrahlung mit zweiter Polarisation detektiert wird, und aus einem Vergleich der zweiten Polarisation mit der ersten Polarisation und/oder einem Vergleich der Strahlung bzw. Intensität der Strahlung der zweiten und ersten Polarisation Unregelmäßigkeiten in dem Messobjekt ermittelt werden.

Somit wird Radarstrahlung mit einer ersten Polarisation auf eine Oberfläche des Messobjektes eingestrahlt und von dem Messobjekt an seiner Oberfläche reflektierte und/oder durch das Messobjekt transmittierte Radarstrahlung mit einer zweiten Polarisation detektiert, und die Polarisation bzw. Änderung in der Polarisation der ausgesandten und detektierten Strahlung bewertet. Diesem Verfahren liegt die Erkenntnis zugrunde, dass Unregelmä-ßigkeiten in einem Messobjekt, insbesondere Extrusionsprodukt, auch die Polarisation beeinflussen können, oder dass sich die Unregelmäßigkeit gegenüber Strahlung unterschiedlicher Polarisation anders verhält als andere Bereiche des Messobjektes. Somit kann ein Vergleich der Polarisationen vor und nach Auftreffen auf das Messobjekt Hinweise zu den Unregelmäßigkeiten liefern, insbesondere durch einen Vergleich mit vorherigen Messungen an den anderen Bereichen ohne die Unregelmäßigkeit.

So wird bei Reflexion und Transmission an Unregelmäßigkeiten wie Defekten, Material- und Oberflächenveränderungen und Materialspannungen die Polarisation allgemein beeinflusst. Insbesondere wird abhängig vom Einfallswinkel auf die Oberfläche der Grad der Reflexion und/oder Transmission einer polarisierten Strahlung geändert. So kann insbesondere Strahlung einer ersten Polarisation besser oder schlechter reflektiert und transmittiert werden als die hierzu orthogonale Strahlung der zweiten Polarisation.

Es zeigt sich insbesondere, dass die Vermessung eines Extrusionsobjektes, insbesondere eines Kunststoffrohrs oder eines Kunststoffstrangs nach der Extrusion, genaue Analysen ermöglicht. So können in dem noch teilweise weichen Material Verunreinigungen und Defekte in oder auf den Wänden detektiert werden. Anders als in der US 2022/0026372 A1 wird somit insbesondere ein extrudiertes Rohr nach der Extrusion durchgängig und fortlaufend mittels frequenzmodulierter THz-Strahlung untersucht, d.h. nicht nur eine Schweißstelle auf Materialspannungen. Anders als in der US 2022/0026372 A1, in der polarisierte Strahlung zur Detektion von Spannungen eingesetzt wird, können erfindungsgemäß durch die polarisierte Strahlung auch Einschlüsse und Defekte erfasst werden.

Neben der selektiven Reflexion und Transmission kann weiterhin durch die Unregelmäßigkeit auch eine Drehung der Polarisation erfolgen, insbesondere mit einem anderen Verhalten als in ordnungsgemäßen Bereichen des Messobjektes. Auch eine derartige Drehung kann über das Verhältnis der unterschiedlichen Polarisationen in der detektierten Radarstrahlung ermittelt werden, insbesondere durch Vergleich mit der ausgesandten Strahlung.

Die erste Polarisation der ausgesandten ersten Strahlung und die zweite Polarisation der reflektierten und/ oder transmittierten zweiten Strahlung kann grundsätzlich jeweils Anteile mehrerer Polarisationsebenen aufweisen, z. B. auch mit gleichmäßiger Verteilung in zueinander orthogonalen Polarisationsebenen, oder auch bereits polarisiert sein.

Anstelle der Polarisation in zueinander orthogonalen Ebenen kann auch zirkular oder elliptisch polarisierte Strahlung verwendet werden, bei der gegenläufige Drehrichtungen ein orthogonales System bilden. Somit kann zirkular oder elliptisch polarisierte erste Radarstrahlung ausgesandt und zirkular oder elliptisch polarisierte reflektierte oder transmittierte Radarstrahlung detektiert werden, und aus einem Vergleich der Polarisationsrichtungen, insbesondere der linksdrehenden und rechtsdrehenden Polarisationen, auf die Unregelmäßigkeiten geschlossen wird

Eine polarisations-spezifische Beeinflussung findet im Allgemeinen bereits bei einer Reflexion der Radarstrahlung an einer ordnungsgemäßen Oberfläche in Abhängigkeit des Einfallswinkels statt. So wird unter einem flacheren Einfallswinkel einfallende Radarstrahlung im Allgemeinen in der zur Oberfläche senkrechten Polarisation anders reflektiert wird als Strahlung mit einer Polarisation parallel zur Oberfläche, sodass z.B. ein Verhältnis der Strahlungen in den Polarisationsebenen bewertet werden kann. Beim Auftreten von Unregelmäßigkeiten kann diese Eigenschaft bzw. dieses Verhältnis deutlich geändert werden. So kann die selektive Reflexion durch die Unregelmäßigkeit abgeschwächt werden, wobei sowohl die zuvor besser reflektierte Strahlung schlechter als auch die zuvor schlechte reflektierte Strahlung besser reflektiert werden kann. Somit ist das Verhältnis der Polarisationen, d. h. z. B. das Verhältnis der Intensität der Strahlung senkrechter Polarisation zu der Intensität der Strahlung paralleler Polarisation, sehr sensitiv für derartige Unregelmäßigkeiten.

Weiterhin kann auch für jede der beiden Polarisationsebenen das Verhältnis der ausgesandten zu der reflektierten und/oder transmittierten Strahlung bewertet werden.

Bei einer Messung in Transmission wird die unter einem Einfallswinkel auf die Oberfläche auftretende erste Radarstrahlung beim Eintritt in die Oberfläche gebrochen, im Allgemeinen zur Normalen hin, da das Messobjekt im Allgemeinen einen höheren Brechungsindex als die umgebende Luft aufweist, und beim Austritt wiederum von der Normalen weggebrochen. Auch bei der Transmission werden die Polarisationen unterschiedlich beeinflusst, so dass auch bei Detektion der transmittierten Strahlung wiederum entsprechende Bewertungen erfolgen. Bei der Transmission können insbesondere auch Bereiche außerhalb der Oberfläche des Messobjektes, insbesondere das gesamte Volumen des Messobjektes, erfasst und bewertet werden.

Die Radar-Messvorrichtung weist eine erste optische Einheit auf, die eine erste optische Einheit und eine zweite optische Einheit aufweist,
wobei die erste optische Einheit Strahlung aussendet, d.h. z.B. als Emitter und/oder erster Transceiver ausgebildet ist, sodass sie Radarstrahlung einer ersten Polarisation entlang einer ersten optischen Achse aussendet, und wobei die zweite optische Einheit die Strahlung empfängt oder reflektiert, so dass sie z.B. als Receiver und/oder zweiter Transceiver und/oder Reflektor ausgebildet ist, mit einer zweiten optischen Achse.

Die von dem ersten Transceiver entlang seiner ersten optischen Achse ausgesandte Strahlung kann nach der Reflexion oder Transmission nachfolgend von einem zweiten Transceiver detektiert werden, der mit seiner zweiten optischen Achse entsprechend der Geometrie der Reflexion und/oder Transmission ausgerichtet ist; hierbei kann diese Anordnung aus zwei Transceivern auch alternierend betrieben werden. Bei einer direkten Messung der Reflexion oder Transmission durch einen Transceiver kann ein relativ starkes Signal erzeugt werden. Weiterhin kann auch ein Reflektor derartig angeordnet sein, dass er die detektierte und/oder transmittierte Strahlung zurückreflektiert, so dass der erste Transceiver die zurück reflektierte Strahlung nachfolgend detektiert, wobei die Radarstrahlung dann den Detektionsbereich des Messobjektes zweimal durchlaufen hat. Eine derartige Ausbildung ist kostengünstiger, wobei gegebenenfalls das Signal schwächer ist als bei Einsatz von zwei Transceivern. Weiterhin sind auch Kombinationen hiervon möglich, mit Detektoren und Reflektoren zur Messung sowohl der Transmission als auch Reflexion.

Gemäß einer vorteilhaften Weiterbildung können bei allen Ausführungsformen auch Mehrfachreflexionen in dem Messobjekt bewertet werden. Wenn das Messobjekt eine Schicht mit einer ersten Oberfläche und einer hierzu parallelen zweiten Oberfläche aufweist, treten in dem Messobjekt zwischen den Oberflächen Reflexionen auf, so dass die einfallende Radarstrahlung zunächst in das Messobjekt gebrochen und dann von der Innenseite der anderen Oberfläche teilweise reflektiert wird. Diese Mehrfachreflexionen können ergänzend detektiert und ausgewertet werden. Hierbei wird erfindungsgemäß erkannt, dass diese Mehrfachreflexionen aufgrund der zeitlichen Verzögerung gegenüber der Direktmessung der reflektierten oder transmittierten Strahlung in der Signalamplitude gut erkannt werden und somit speziell ausgewertet werden können. Derartige Mehrfachreflexionen reagieren sehr sensitiv auf Unregelmäßigkeiten, so dass Änderungen gut erfasst werden können.

Die Unregelmäßigkeiten können zunächst qualitativ erfasst werden, indem zeitliche Änderungen in dem transportierten Messobjekt erkannt werden, so dass z.B. ein entsprechendes Signal zur Anzeige der Unregelmäßigkeit ausgegeben wird. Weiterhin können Unregelmäßigkeiten auch bewertet und erkannt werden, z.B. durch einen Vergleich mit Referenzmessungen an entsprechenden Unregelmäßigkeiten, die vorab durchgeführt werden. Hierbei können auch selbstlernende Algorithmen oder künstliche Intelligenz eingesetzt werden, die bereits erkannte und detektierte Unregelmäßigkeiten und die hierzu vorliegenden Messdaten speichern und vergleichen.

Das erfindungsgemäße Verfahren und die erfindungsgemäße Radar-Messvorrichtung eignen sich insbesondere zur Vermessung von Extrusionsprodukten, insbesondere aus Kunststoff, vorzugsweise in der Extrusionsstrecke nach der Extrusion, da derartige Extrusionsprodukte für Radarstrahlung durchlässig sind und Teil-Reflexionen an ihren Grenzflächen auftreten, weiterhin bei derartigen Extrusionsprodukten entsprechende Unregelmäßigkeiten auftreten und das erfindungsgemäße Verfahren und die erfindungsgemäße Messvorrichtung auch vorteilhafterweise eine kontinuierliche Vermessung eines durch die Messvorrichtung entlang der Transportrichtung geführten Objektes ermöglichen, wie es in einer Extrusionsstrecke erfolgt. Auch können in Extrusionsstrecken erfindungsgemäße Radar-Messvorrichtungen bereits für Ermittlungen von Schichtdicken und Brechungsindizes der Extrusionsprodukte eingesetzt werden, so dass hier mit geringem Aufwand die zusätzliche Funktionalität ausgebildet werden kann.

Neben einfachen Extrusionsprodukten wie Rohren, Profilen und Folien können auch komplexe Extrusionsprodukte vermessen werden, z.B. Wellrohre, die in ihrer Transportrichtung alternierende Berge und Täler aufweisen. Hierbei führt die Formkonturierung des Wellrohres bei Transport durch die Messvorrichtung zu spezifischen Messsignalen, insbesondere auch zu Änderungen in den Polarisationen, da sich der Einfallswinkel der Radarstrahlen an der konturierten Oberfläche fortlaufend ändert. Somit kann bereits die Position von Bergen und Tälern erkannt werden, was z.B. auch zur Ansteuerung einer nachfolgenden Radar-Messvorrichtung genutzt werden kann, die geeignet ausgerichtet werden kann.

Gemäß einer vorteilhaften Ausbildung sind weiterhin in der Messanordnung die Polarisationen beeinflussende optische Einrichtungen vorgesehen. Hierbei kann z.B. ein Polarisationsfilter in der ersten optischen Achse und/oder in der zweiten optischen Achse vorgesehen sein. Hierdurch sind insbesondere auch Transceiver einsetzbar, die die Radarstrahlung unspezifisch aussenden und detektieren, da die unterschiedlichen Polarisationen durch die Polarisationsfilter ausgebildet werden. Die Polarisationsfilter können in den optischen Achsen mit gleicher Ausrichtung oder unterschiedlich angeordnet sein, um z. B. Drehungen selektiver zu detektieren.

Weiterhin können als optische Einrichtungen auch optisch aktive Mittel, z.B. die Polarisation drehende optische Einrichtungen vorgesehen sein, z.B. auch Verzögerungsplatten und entsprechende Einrichtungen, die die Polarisationen unterschiedlich verzögern. Mit derartigen Mitteln sind somit spezielle Auswertungen möglich, wobei die Kosten derartiger ergänzender optischen Mittel gering sind.

Weiterhin sind Messungen in unterschiedlichen Frequenzen bzw. Frequenzbereichen möglich. Bei Einsatz von FMCW-Radar, bei dem somit ein Frequenzbereich durchfahren bzw. durchscannt wird, können die einzelnen Frequenzanteile spezifisch untersucht werden, um eine frequenzabhängige Auswertung des Reflexionskoeffizienten zu ermöglichen.

Weiterhin sind Messungen mit unterschiedlichen Einfallswinkeln möglich, bei denen Unregelmäßigkeiten jeweils zu unterschiedlichem Reflexionsverhalten führen.

Bei Einsatz in einer Extrusionsstrecke oder einem Extrusionsverfahren können somit Fehler und Unregelmäßigkeiten direkt erkannt werden, wozu dann z.B. ein Fehlersignal oder Anzeigesignal ausgeben wird. Weiterhin können auch in dem Extrusionsprodukt auftretende regelmäßige Änderungen bewertet werden, z.B. sich ausbildende Materialspannungen beim Abkühlen, so dass Unregelmäßigkeiten in der Ausbildung der Materialspannungen erkannt werden können.

Die Frequenz der Radarstrahlung kann insbesondere im Bereich von 10 GHz bis 50 THz, z. B. 50 GHz bis 4 THz, z. B. 50 GHz bis 1 THz liegen, wird mit Frequenzmodulation erzeugt und ausgestrahlt. Als Frequenzmodulation kann insbesondere FMCW (frequency modulated continuous wave)-Radar eingesetzt werden. Bei der Frequenzmodulation kann insbesondere eine Mittenfrequenz im Bereich von 8ß0 bis 700 GHz und z.B. eine Bandbreite von 50 bis 100 GHz eingesetzt werden.

Es zeigt sich, dass insbesondere für das vorliegende Verfahren ein FMCW-Radar eine kostengünstige Ausbildung der Messvorrichtung bei selektiver Untersuchung der einzelnen Frequenzbereiche ermöglicht. So kann ein kostengünstiger Chip bzw. integrierte Schaltung mit einem FMCW-Schwingkreis eingesetzt werden, statt der aufwändigen optischen Laser-Anordnung des Standes der Technik, bei sehr guten Messergebnissen.

Die Erfindung wird im Folgenden anhand der beiliegenden Zeichnungen an einigen Ausführungsformen näher erläutert. Es zeigen:
- Fig. 1: eine Messanordnung zur Vermessung eines Extrusionsproduktes in Reflexion, mit einem Reflektor;
- Fig. 2: eine weitere Ausführungsform zur Vermessung eines Extrusionsproduktes in Reflexion, mit zwei Transceivern;
- Fig. 3: die Änderung des Anteils der Strahlung mit paralleler Polarisation;
- Fig. 4: die Änderung des Anteils der Strahlung mit senkrechter Polarisation;
- Fig. 5: eine Messanordnung in Transmission mit zwei Transceivern;
- Fig. 6: eine Messung in Transmission mit Transceiver und Reflektor;
- Fig. 7: die Messanordnung der Figur 1 unter Betrachtung der zweiten Reflexion;
- Fig. 8: die Messanordnung aus Figur 2 unter Betrachtung der zweiten Reflexion;
- Fig. 9: eine Darstellung der Vermessung eines Wellrohres in Reflexion;
- Fig. 10: eine Darstellung der Vermessung eines Wellrohres in Reflexion und Transmission;
- Fig. 11: eine weitere Messanordnung in Reflexion mit zusätzlichen optischen Einrichtungen mit Reflektor;
- Fig. 12: eine der Figur 11 entsprechende Darstellung mit zwei Transceivern.

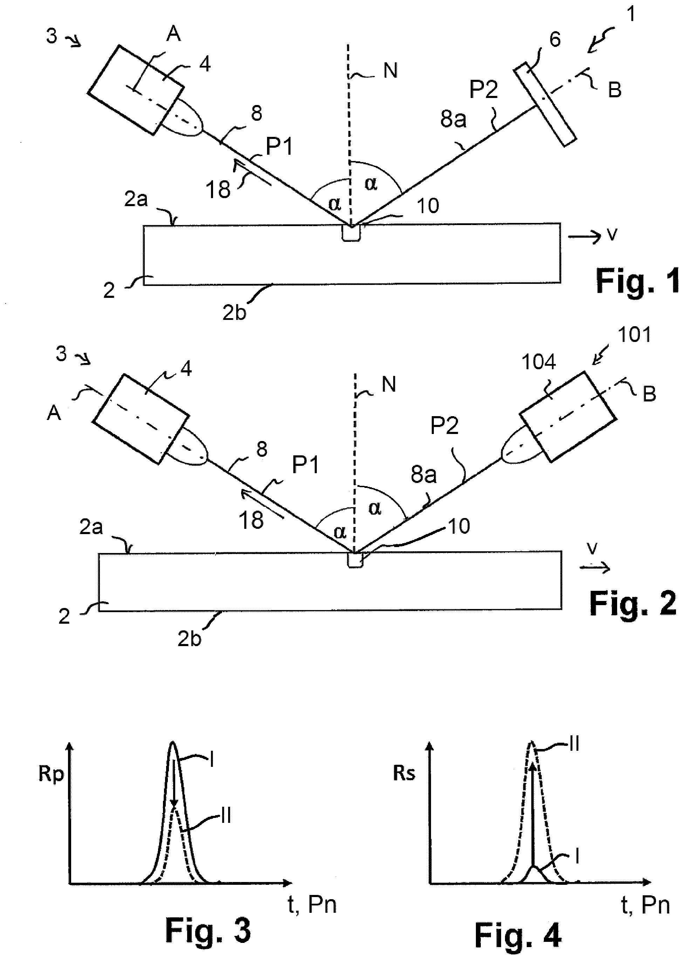

Figur 1 zeigt eine Messanordnung 1 aus einem Extrusionsprodukt 2, z. B. einem Rohr oder Strang, das nach der Extrusion mit einer Fördergeschwindigkeit v in seiner Längsrichtung gefördert wird. Das Extrusionsprodukt 2 kann somit insbesondere direkt nach der Extrusion, z. B. nach einem Kühlbad, vermessen werden. Eine Radar-Messvorrichtung 3 weist gemäß der Ausführungsform der Figur 1 einen Radar-Transceiver 4 und einen Reflektor 6 auf. Der Reflektor 6 ist hier als planer Spiegel dargestellt; er kann auch z. B. konkav gewölbt sein. Das Extrusionsprodukt 2 weist eine Oberfläche 2a auf, zu der die Normale N entsprechend eingezeichnet ist. Der Radar-Transceiver 4 sendet Radarstrahlen 8 entlang seiner optischen Achse A unter einem Einfallswinkel α gegenüber der Normalen N auf die Oberfläche 2a, so dass die Radarstrahlen 8 an der Oberfläche 2a entsprechend reflektiert oder teilreflektiert werden und zu dem Reflektor 6 gelangen. Der Reflektor 6 ist senkrecht zu der zweiten optischen Achse B ausgerichtet, die entsprechend unter dem Einfallswinkel alpha gegenüber der Normalen N ausgerichtet ist, so dass der Reflektor 6 die reflektierten Radarstrahlen 8a wiederum senkrecht zurückreflektiert, so dass diese nach erneuter Reflexion an der Oberfläche 2a von dem Radar-Transceiver 4 detektiert werden. Somit wird ein Detektionsbereich des Extrusionsproduktes 2 vermessen, der bei der Reflexionsmessung der Figur 1 und 2 im Wesentlichen an der Oberfläche 2a ausgebildet ist. Da das Extrusionsprodukt 2 fortlaufend mit der Fördergeschwindigkeit v befördert wird, ist somit eine durchgängige Vermessung eines Teils der Oberfläche 2 möglich.

Der ausgesandte Radarstrahl 8 weist eine erste Polarisation P1 auf. Die erste Polarisation P1 kann ohne spezielle Ausrichtung erfolgen, oder auch als lineare, elliptische oder zirkulare Polarisation. Der reflektierte Radarstrahl 8a weist eine zweite Polarisation P2 auf, die im Allgemeinen gegenüber der ersten Polarisation P1 verändert ist. So führt eine Reflexion an der Oberfläche 2a, insbesondere auch in Abhängigkeit des Einfallswinkels α, zu einer unterschiedlichen Reflexion der Polarisations-Anteile des ausgesandten Radarstrahls 8. Somit liegt in Abhängigkeit des Einfallswinkels α bei ordnungsgemäßer Oberfläche 2a ein spezifisches Verhältnis Rs/Rp, mit Rs Anteil der Radarstrahlen 8a in der Polarisationsebene senkrecht zur Oberfläche 2a, und Rp Anteil des Radarstrahlen 8a in der Polarisationsebene parallel zur Oberfläche 2a, vor. Bei festem Einfallswinkel α kann somit das Verhältnis Rs/Rp detektiert werden.

Weiterhin tritt an der Oberfläche 2a grundsätzlich auch eine Drehung der Polarisationsebene des einfallenden Radarstrahls 8 auf, wobei diese Drehung insbesondere auch von der Oberfläche 2a bzw. ihren Eigenschaften abhängt. Bei der Messanordnung 1 der Figur 1 können somit die nacheinander an der Oberfläche 2a, dem Reflektor 6 und wiederum an der Oberfläche 2a zurückreflektierte Radarstrahlen 18 sensiert und bezüglich ihrer Polarisation untersucht werden. So kann in einer einfachen Ausführungsform der Radarstrahl 8 mit unterschiedlichen Anteilen in senkrechter und paralleler Polarisation ausgegeben, und die Intensität bzw. Signalamplitude des zurückreflektierten Radarstrahls 18 für die jeweiligen Polarisationen detektiert werden, um die Oberfläche 2a zu bewerten. Bei einer Drehung ändert sich insbesondere auch das Verhältnis der Polarisationsrichtungen Rs und Rp des reflektierten Radarstrahls 8a gegenüber dem einfallenden Radarstrahl 8. Weiterhin kann in Figur 1 auch ein zirkular oder elliptisch polarisierter Radarstrahl 8 verwendet werden, der zu charakteristischem Reflexionsverhalten führt.

Somit treten bereits bei ordnungsgemäßen Oberflächen 2a optische Effekte auf, die durch die Polarisationen ermittelt werden können. Wenn in Figur 1 in dem Detektionsbereich eine Unregelmäßigkeit 10 auftritt, die durch Defekte, Verunreinigungen bzw. Einschlüsse, oder Materialspannungen bewirkt wird, wird das Reflexionsverhalten der Oberfläche 2a geändert. Insbesondere wird die Polarisation des reflektierten Radarstrahls 8a beeinflusst. Hierbei können die Polarisationsanteile Rs und Rp unterschiedlich stark beeinflusst werden, oder es kann eine spezifische Drehung eines Teils des einfallenden Radarstrahls 8 erfolgen. So kann bereits eine Änderung in der Strahlencharakteristik des zurück zum Transceiver 4 reflektierten Radarstrahls 18 auf eine Unregelmäßigkeit hinweisen; diese Detektion kann somit zunächst qualitativ erfolgen, dass eine ungewöhnliche Änderung und somit Unregelmäßigkeit 10 im Detektionsbereich vorliegt. Weiterhin kann auch eine spezifischere Bewertung auf die Art der Materialveränderung bzw. Unregelmäßigkeit erfolgen.

Bei der Messung nach Figur 1 können auch Messungen bei unterschiedlichem Einfallswinkel α durchgeführt werden, wobei sich insbesondere das Verhältnis Rs/Rp in Abhängigkeit des Einfallswinkels α ändert. Weiterhin kann der Radarstrahl 8 in einer Frequenz, oder auch breitbandig ausgegeben werden. So sind grundsätzlich auch Messungen in unterschiedlichen Frequenzen bzw. Frequenzbereichen möglich, bei denen Unregelmäßigkeiten zu unterschiedlichem Reflexionsverhalten führen können.

Statt des Verhältnisses Rs/Rp kann entsprechend auch das Verhältnis zweier anderer ungleicher, insbesondere orthogonaler Polarisationsrichtungen bewertet werden, da sich eine Polarisationrichtung als Vektor in dem jeweiligen Koordinatensystem z. B. Rs/Rp, oder auch eines anderen orthogonalen Koordinatensystems darstellen lässt.

Somit kann der in Figur 1 gezeigte Transceiver 4 bei Feststellen einer Unregelmäßigkeit ein entsprechendes Ausgabesignal ausgeben, woraufhin z. B. eine genauere Untersuchung des Detektionsbereichs erfolgen kann. Weiterhin kann diese Messung mit einer nachfolgend vorgesehenen Detektion, z. B. Radar-Vermessung zur Schichtdickenstimmungen, verglichen werden.

Bei der Ausführungsform der Figur 2 sind zwei Transceiver 4, 104 vorgesehen, d. h. statt des Reflektors 6 ein zweiter Transceiver 104 mit entsprechender Ausrichtung seiner optischen Achse B unter dem gleichen Einfallswinkel α gegenüber der Normalen N wie der erste Transceiver 4. Hier kann grundsätzlich z. B. statt des ersten Transceivers 4 auch ein reiner Transmitter, und statt des zweiten Transceivers 104 ein Receiver vorgesehen sein, so dass eine Detektion in eine Richtung erfolgt. Bei der Detektion kann somit direkt der reflektierte Radarstrahl 8a von dem zweiten Transceiver 104 detektiert werden. Die entsprechende Messung kann auch umgekehrt erfolgen, mit aktiv aussendendem zweiten Transceiver 104 und detektierendem ersten Transceiver 4. Hierbei kann eine Synchronisation der Transceiver 4, 104 vorgesehen sein; grundsätzlich ist eine Synchronisation nicht erforderlich, da nicht genaue Laufzeiten zu bestimmen sind, sondern eine Änderung der empfangenen Strahlcharakteristik erfolgen soll.

Figur 3 zeigt die Signalamplitude (oder Intensität) des Anteils der reflektierten Strahlung Rp parallel zur Oberfläche 2a, wobei mit I die Signalamplitude ohne Unregelmäßigkeit und mit II die Signalamplitude mit einem Beispiel einer Unregelmäßigkeit gezeigt ist; Figur 4 zeigt die entsprechende Darstellung des Anteils der reflektierten Strahlung Rs mit Polarisationsebene senkrecht zur Oberfläche 2a. Das ideale Reflexionsverhalten an einer planen, ungestörten Oberfläche 2a führt zu der teilweisen Unterdrückung der senkrecht einfallenden Strahlung, d. h. einem kleinen Wert von Rs und einem relativ großen Anteil der parallel einfallenden Strahlung Rp. Gemäß Figur 3 wird durch eine Unregelmäßigkeit der Wert von Rp reduziert, und gemäß Figur 4 der Wert von Rs vergrößert. Ergänzend kann eine Änderung der gesamten Signalamplitude bzw. Intensität gemessen werden.

In den Anordnungen von Figur 1 und 2 kann der Einfallswinkel α auch als Brewster-Winkel αB gewählt werden, mit αB = arctan (n2/n1), mit n2 als Brechungsindex des Extrusionsproduktes 2 und n1 als Brechungsindex der umgebenden Luft, d.h. n1 etwa gleich 1. Bei dieser Anordnung wird in der Einfallsebene polarisierte Radarstrahlung nicht reflektiert, d. h. Rp = 0 bzw. im Wesentlichen 0, so dass eine Änderung sehr signifikant ist. Hierbei tritt an Materialbesonderheiten, insbesondere Materialdefekten vermehrt eine andere Polarisation auf. Hierbei kann Rs anteilig zunehmen. Da der Wert von Rp von 0 ausgehend deutlich erhöht wird, ändert sich somit das Verhältnis Rp/Rs sehr stark, so dass eine Detektion von kleinen Änderungen möglich ist. Somit ist der Kontrast von Rs bzw. dem Verhältnis Rp/Rs an Unregelmä-ßigkeiten sehr hoch, so dass eine signifikante Detektion möglich ist.

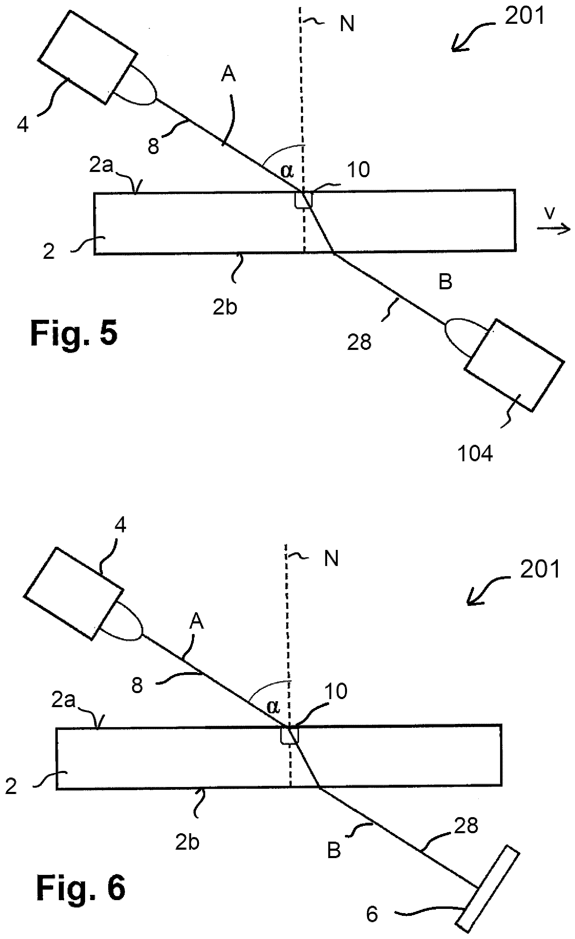

Figur 5 zeigt eine Messanordnung 201 in Transmission, mit zwei Transceivern 4, 104. Somit gibt der erste Transceiver 4 seinen Radarstrahl 8 wiederum unter dem Einfallswinkel α gegenüber der Normalen N auf die Oberfläche 2a aus, der an der Oberfläche 2a zur Normalen N hin gebrochen wird, da der Brechungsindex n2 größer n1 von Luft ist. Nachfolgend wird der Strahl beim Austritt aus der unteren Oberfläche 2b entsprechend zurückgebrochen und als transmittierter Radarstrahl 28 von dem zweiten Transceiver 104 detektiert wird. Bei diesem Aufbau in Transmission ist somit eine Vermessung des gesamten Volumenbereichs des Extrusionsproduktes 2 möglich, und nicht nur des bei der Reflexion beteiligten Bereichsoberfläche 2a. Auch bei dieser Messanordnung tritt wiederum an Materialunregelmäßigkeiten 10 bzw. Materialdefekten im Extrusionsprodukt 2 eine Änderung der Polarisation des transmittierten Strahls 28 auf. Mit Ts als Anteil des transmittierten Strahls 28 mit Polarisationsebene senkrecht zur Oberfläche 2b, und Tp Anteil des transmittierten Radarstrahls 20 mit Polarisationsebene parallel zur Oberfläche 2a und 2b, ändert sich wiederum entsprechend Tp/Ts oder Ts/Tp. Insbesondere ist der Kontrast von Ts an Defekten groß. Figur 6 zeigt eine entsprechende Messanordnung mit Transceiver 4 und unterhalb des Extrusionsproduktes 2 vorgesehenen Reflektor 6, d. h. eine Messanordnung entsprechend Figur 1, so dass der ausgesandte Radarstrahl 8 nach Transmission als transmittierter Radarstrahl 28 am Reflektor 6 reflektiert und zurück durch das Messobjekt 2 zu dem Transceiver 4 gelangt, wo er detektiert wird. Da das Extrusionsprodukt 2 zwei Mal durchquert wird, können Änderungen stärker detektiert werden.

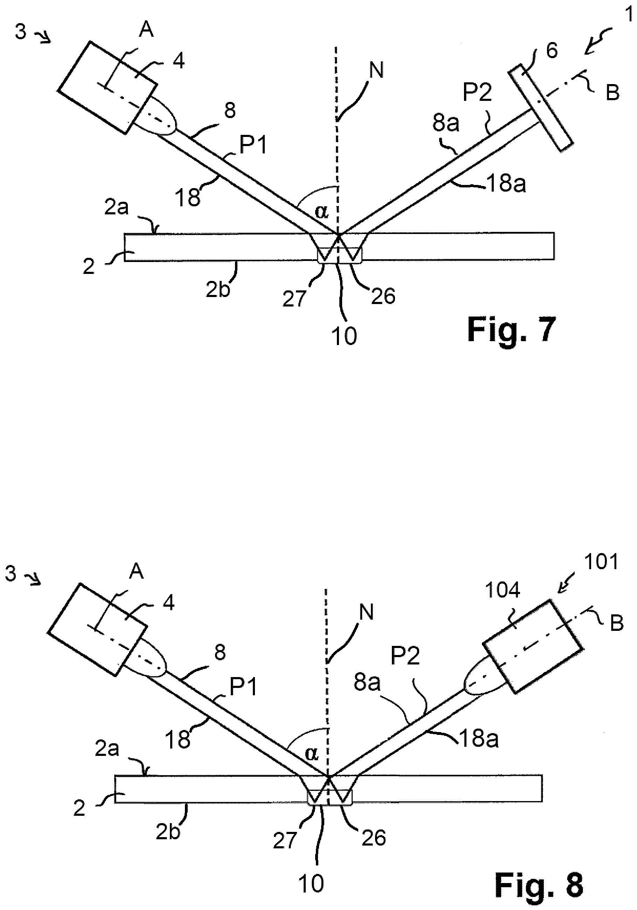

Figur 7 zeigt eine Vermessung mit einer Messanordnung 1 entsprechend Figur 1, wobei hier ergänzend die zweite Reflexion 26 an der unteren Oberfläche 2b betrachtet wird. Somit tritt zusätzlich zu der in Figur 1 gezeigten Reflexion an der ersten Oberfläche 2a bzw. Oberseite eine - hier parallel bzw. versetzt gezeigte - Brechung an der Oberfläche 2a nach innen, eine zweite Reflexion 26 an der Innenseite der zweiten Oberfläche 2b, und nachfolgend wiederum von innen her teilweise ein Austritt nach oben durch die Oberfläche 2a auf, der hier als Strahlung 18a gezeigt ist. Entsprechend wird die direkt an der Oberfläche 2a reflektierte Strahlung 8a am Reflektor 6 reflektiert und wird teilweise an der Oberfläche 2a nach innen gebrochen, als weitere Reflexion 27 nach oben reflektiert und beim Austritt aus der Oberfläche 2a nach außen zu dem Transceiver 4 gebrochen, jeweils mit einem Strahlenverlauf in der Luft unter dem Einfallswinkel alpha.

Somit treten hier zweite Reflexionspeaks auf, die bei dieser Geometrie insbesondere gleiche Laufzeiten haben sollten und somit als gemeinsamer zweiter Reflexionspeak detektiert werden, weiterhin auch nachfolgende, von der Intensität her kleiner werdende Reflexionspeaks durch mehrfache Reflexionen, wobei insbesondere der gemeinsame zweite Reflexionspeak bei dünnen Extrusionsprodukten 2 noch vom Transceiver 4 detektiert werden kann. Hierdurch kann somit auch eine Unregelmäßigkeit 10 innerhalb des Extrusionsproduktes 2 oder auch an der unteren Oberfläche 2b detektiert werden.

Diese Vermessung kann entsprechend Figur 7 bei der Messanordnung der Figur 1 erfolgen, und entsprechend Figur 8 bei der Messanordnung der Figur 2 in zwei Transceivern 4, 104.

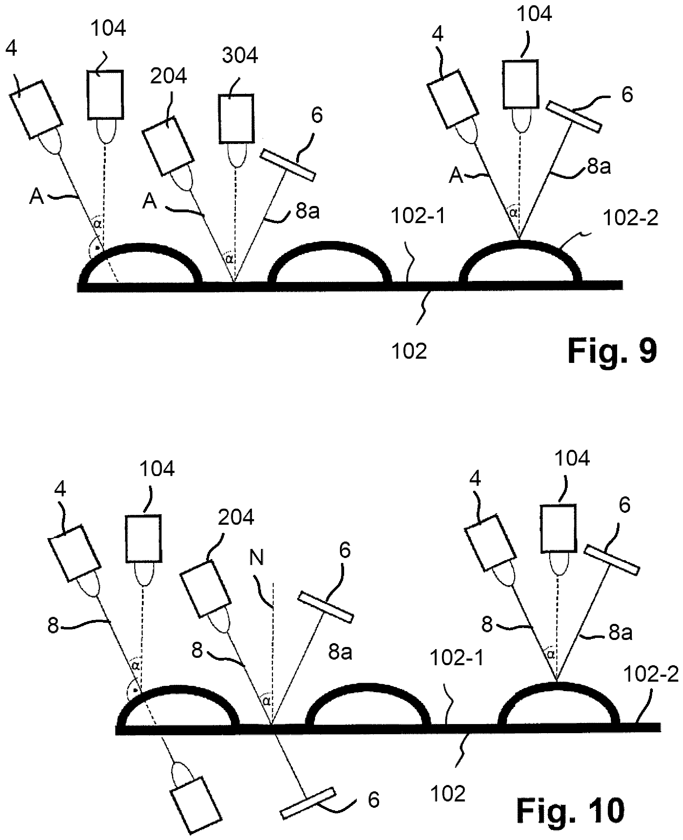

Figur 9 und 10 zeigen Vermessungen eines Wellrohres 102, wobei hier zunächst die Vermessung einer der Oberflächen gezeigt ist. In Figur 9 ist links zunächst die Vermessung mit zwei Transceivern 4, 104 und einer Sensorausrichtung unter einem festen Winkel α gezeigt. Hier ergeben sich entsprechend der spezifischen Oberflächenform abschnittsweise unterschiedliche Einfallswinkel. Rechts daneben ist eine Vermessung mit zwei Transceivern 204 und 304 sowie einem Reflektor 6 gezeigt, die zu Signalen in speziellen Winkelausrichtungen zu der Oberfläche führen, sodass Täler 102-1, hier z.B. mit einer planen Oberfläche, und Wellen 102-2 detektiert werden können. Durch Auswertung der verschiedenen Polarisationen, z.B. auch von zwei verschieden polarisierten Signalen, kann der Oberflächenwinkel bzw. die Oberflächenkrümmung bestimmt werden. Weiterhin kann auch der Konturverlauf der Strukturen vermessen werden. Insbesondere kann durch die erste Vermessung eine optimale, rechtwinklige Einkopplung für eine nachfolgende Wanddickenmessung mit Transceivern 104, 304 erfolgen, die senkrecht zum Wellrohr 102 ausgerichtet sind.

Entsprechend ist in Figur 10 auch eine Vermessung in Transmission gezeigt, die somit auch Strukturen nahe Oberseite und Unterseite eines Wellrohres 102 detektieren kann.

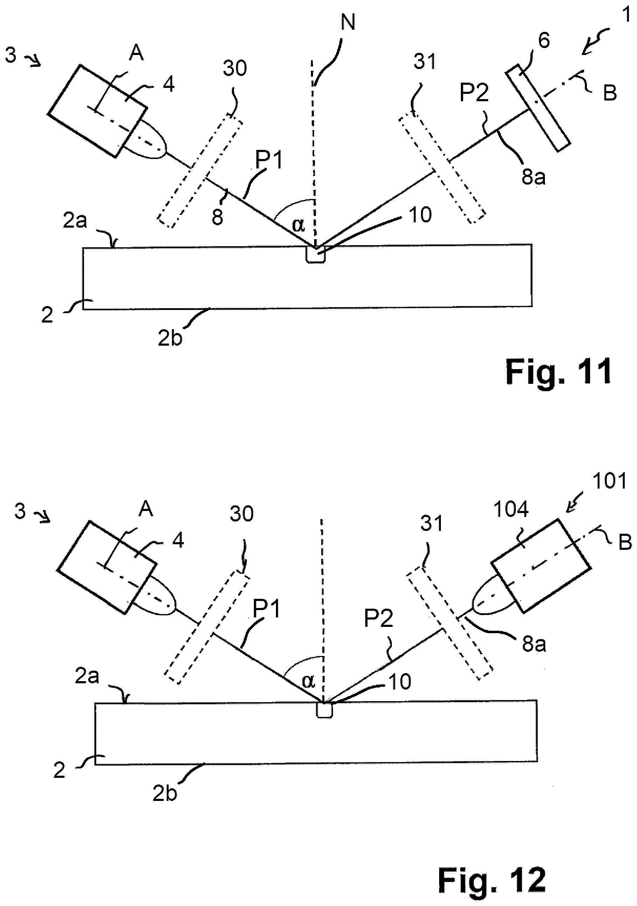

Bei der Ausführungsform der Figur 11 sind ergänzend zu der Messanordnung der Figur 1 zwei optische Elemente 30, 31 vorgesehen. Die optischen Elemente 30, 31 beeinflussen die Polarisation, wobei hier verschiedene Effekte ausgenutzt werden können. So können die Elemente 30, 31 z. B. Polarisationsfilter sein, die spezifische Polarisationsrichtungen filtern bzw. durchlassen und die hierzu senkrechte Polarisationsrichtung bzw. Polarisationsebene blockieren. Weiterhin können die optischen Elemente 30, 31 als Verzögerungsplatten ausgebildet sein, z.B. λ /2 oder λ /4 - Platten, die den einfallenden Radarstrahl 8 bei unterschiedlichen Polarisationen unterschiedlich verzögern, so dass der Radarstrahl 8 bzw. 8a spezifisch geändert wird. Hierdurch kann z. B. auch eine teilweise Kompensation einer Drehung an der Oberfläche 2a erreicht werden.

Weiterhin sind entsprechende Anordnungen mit optischen Einrichtungen 30, 31 möglich, die z. B. aktiv beeinflussbar sind, z. B. durch ein entlang der optischen Achse B angelegtes Magnetfeld die Polarisation drehen (Faraday-Effekt).

### Bezugszeichenliste

- 1, 101, 201: Messanordnung
- 2: Extrusionsprodukt
- 2a: erste Oberfläche (Oberseite)
- 2b: zweite Oberfläche (Unterseite)
- 3: Radar-Messvorrichtung
- 4: Radar-Transceiver
- 6: Reflektor
- 8: ausgesandter Radarstrahl
- 8a: Reflexionsstrahl
- 10: Unregelmäßigkeit in Detektionsbereich
- 18: Reflexionsstrahl
- 26: zweite Reflexion
- 27: weitere zweite Reflexion
- 28: transmittierter Radarstrahl
- 30: erstes optisches Element
- 31: zweites optisches Element
- 104: zweiter Radar-Transceiver
- A: optische Achse
- B: optische Achse der Reflexion oder Transmission
- n1: Brechungsindex in der umgebenden Luft
- n2: Brechungsindex im Extrusionsprodukt
- v: Fördergeschwindigkeit
- P1: erste Polarisation
- P2: zweite Polarisation
- Rs: Anteil der reflektierten Strahlung mit Polarisationsebene senkrecht zur Oberfläche 2a
- Rp: Anteil der reflektierten Strahlung mit Polarisationsebene parallel zur Oberfläche 2a
- N: Normale
- α: Einfallswinkel
- Ts: Anteil der transmittierten Strahlung mit Polarisationsebene senkrecht zur Oberfläche 2a
- Tp: Anteil der transmittierten Strahlung mit Polarisationsebene parallel zur Oberfläche 2a
- 204, 304: Transceiver
- 102: Wellrohr
- 102-1: Tal
- 102-2: Berg

## Patentansprüche

1. Verfahren zur Detektion von Unregelmäßigkeiten in Messobjekten (2), bei dem
frequenzmodulierte erste Radarstrahlung (8) mit einer ersten Polarisation (P1) erzeugt wird und entlang einer optischen Achse (A) auf ein Messobjekt (2) eingestrahlt wird, wobei das Messobjekt (2) für die Radarstrahlung zumindest teilweise durchlässig ist, und
von dem Messobjekt (2) reflektierte und/oder transmittierte frequenzmodulierte zweite Radarstrahlung (8a, 18, 28) mit zweiter Polarisation (P2) detektiert wird, und
aus einem Vergleich der zweiten Polarisation (P2) mit der ersten Polarisation (P1) Unregelmäßigkeiten in dem Messobjekt (2) ermittelt werden.

2. Verfahren nach Anspruch 1, **dadurch gekennzeichnet, dass**
von der frequenzmodulierte ersten Radarstrahlung (8) mit erster Polarisation (P1) und der reflektierten und/oder transmittierten frequenzmodulierten zweiten Radarstrahlung (8a, 18) mit der zweiten Polarisation (P2) jeweils Anteile (Rs, Rp, Ts, Tp) einer ersten Polarisationsebene und einer hierzu orthogonalen zweiten Polarisationsebene, und/oder von entgegengesetzt zirkularen Polarisationen ermittelt werden, und
die Anteile und/oder ein Verhältnis (Rs/Rp, Ts/Tp) der Anteile gebildet und bewertet werden.

3. Verfahren nach Anspruch 2, **dadurch gekennzeichnet, dass** von der ausgesandten ersten Radarstrahlung (8) und der reflektierten oder transmittierten zweiten Radarstrahlung (8a, 18) jeweils die Anteile einer zu einer Oberfläche (2a) des Messobjektes (2) senkrechten Polarisationsebene (Ps) und einer zu der Oberfläche (2a) des Messobjektes (2) parallelen Polarisation (Pp) ermittelt werden,
wobei die Anteile und/oder ein Verhältnis (Rs/Rp, Ts/Tp) der Anteile miteinander verglichen wird.

4. Verfahren nach Anspruch 3, **dadurch gekennzeichnet, dass**
ein Verhältnis der Strahlung der senkrechten Polarisation (Ps) und der parallelen Polarisation (Pp) sowohl von der ersten ausgesandten Radarstrahlung (8) als auch der transmittierten oder reflektierten zweiten Radarstrahlung (8a, 18) ermittelt wird und die beiden Verhältnisse bewertet, insbesondere miteinander verglichen werden,
und/oder
ein Verhältnis der Strahlung mit senkrechter Polarisation der ersten Radarstrahlung (8) zu der Strahlung mit senkrechter Polarisation (Rs) der zweiten Radarstrahlung (8a, 18) ermittelt wird und entsprechend ein Verhältnis der Strahlung paralleler Polarisation der ersten Radarstrahlung (8) zu der Strahlung mit paralleler Polarisation (Rs) der zweiten Radarstrahlung (8a, 18) ermittelt wird, und die Verhältnisse bewertet werden.

5. Verfahren nach einem der vorherigen Ansprüche, **dadurch gekennzeichnet, dass** die frequenzmodulierte THz-Strahlung als FMCW-Strahlung ausgebildet wird.

6. Verfahren nach einem der vorherigen Ansprüche, **dadurch gekennzeichnet, dass** als Unregelmäßigkeiten eine oder mehrere der folgenden Eigenschaften ermittelt werden:
Defekte, Materialveränderungen, Oberflächenveränderungen, Materialspannungen, Einschlüsse, Verunreinigungen.

7. Verfahren nach einem der vorherigen Ansprüche, **dadurch gekennzeichnet, dass**
die frequenzmodulierten ersten Radarstrahlen (8) von einer Radar-Messvorrichtung (3) auf die Oberfläche (2a) des Messobjektes s (2) eingestrahlt werden und das Messobjekt (2) fortlaufend relativ zu der Radar-Messvorrichtung (3) in einer Transportrichtung und/oder mit einer Transportgeschwindigkeit (v) verstellt wird,
und aus einer Bewertung des zeitlichen Verhaltens der detektierten reflektierten und/oder transmittierten Radarstrahlen (8a, 18, 28) auf die Unregelmäßigkeiten in dem Messobjekt (2) geschlossen wird, z.B. durch eine Änderung des Verhältnisses der Polarisationen der reflektierten und/oder transmittierten Radarstrahlen (8a, 18, 28).

8. Verfahren nach einem der vorherigen Ansprüche, **dadurch gekennzeichnet, dass** Radarstrahlen detektiert werden, die zwischen den Oberflächen (2a, 2b) das Messobjekt (2) mehrfach reflektiert worden sind, detektiert und bewertet werden,
wobei die mehrfach reflektierten Radarstrahlen gegenüber den nicht mehrfach reflektieren Radarstrahlen durch eine Laufzeitverzögerung ermittelt werden.

9. Verfahren nach einem der vorherigen Ansprüche, **dadurch gekennzeichnet, dass** die ausgesandte Radarstrahlung (8) und die reflektierte oder transmittierte Radarstrahlung (8a, 18, 28) in ihrer Polarisation (P1, P2) beeinflusst wird, insbesondere durch optisch drehende Mittel (31) und/oder Polarisationsfilter (30), insbesondere zur Veränderung des Verhältnisses der Anteile in unterschiedlichen Polarisationsrichtungen.

10. Verfahren nach einem der vorherigen Ansprüche, **dadurch gekennzeichnet, dass** als Messobjekt (2) ein Kunststoffprodukt, insbesondere ein Extrusionsprodukt (2) nach der Extrusion, vorzugsweise ein durchgängiges Extrusionsprodukt (2), vermessen wird.

11. Radar-Messvorrichtung (3) zur Fehlerdetektion in Messobjekten e (2), wobei die Radar-Messvorrichtung (3) aufweist:
eine erste optische Einheit (4), die derartig als Emitter und/oder erster Transceiver (4) ausgebildet ist, dass sie frequenzmodulierte Radarstrahlung (8) einer ersten Polarisation (P1) entlang einer ersten optischen Achse (A) aussendet, und
eine zweite optische Einheit (104, 6), die als Receiver und/oder zweiter Transceiver (104) und/oder Reflektor (6) mit einer zweiten optischen Achse (B) ausgebildet ist,
wobei die Radar-Messvorrichtung (3) ausgebildet ist, ein Verfahren nach einem der vorherigen Ansprüche auszuführen.

12. Radar-Messvorrichtung (3) nach Anspruch 11, **dadurch gekennzeichnet, dass** die erste optische Einheit (4) und die zweite optische Einheit (104, 6) derartig ausgerichtet sind, dass ihre optischen Achsen (A, B) sich kreuzen, zur Vermessung eines Messobjektes (2) im Bereich der sich kreuzenden Achsen (A, B).

13. Radar-Messvorichtung (3) nach Anspruch 11 oder 12, **dadurch gekennzeichnet, dass** die zweite optische Einheit als Reflektor (6) ausgebildet ist, dessen zweite optische Achse (B) derartig ausgerichtet ist, dass der Reflektor (6) von dem ersten Transceiver (4) ausgesandte und an dem Messobjekt (2) transmittierte und/oder reflektierte Radarstrahlung (8a, 18) senkrecht zurückreflektiert.

14. Radar-Messvorrichtung nach einem der Ansprüche 11 bis 13,
**dadurch gekennzeichnet, dass** sie eine optische Einrichtung (30, 31) zur Beeinflussung der Polarisation aufweist, insbesondere ein oder mehrere Polarisationsfilter (13) und/oder ein oder mehrere die Polarisationsrichtungen optisch drehende Einrichtungen, z.B. λ/2-Platten und/oder λ/4-Platten.

15. Messanordnung (1), die eine Radar-Messvorrichtung (3) nach einem der Ansprüche 11 bis 14 und das relativ zu der Radar- Messvorrichtung (3) mit einer Transportgeschwindigkeit (v) verstellte Messobjekt, insbesondere Extrusionsprodukt (2), aufweist.

16. Verfahren zur Herstellung eines Extrusionsproduktes (2), bei dem ein Extrusionsprodukt (2), z.B. ein Rohr, ein Strang oder eine Folie, von einem Extruder fortlaufend entlang einer Förderrichtung mit einer Transportgeschwindigkeit (v) ausgegeben und mit einem Verfahren nach einem der Ansprüche 1 bis 10 und/oder einer Radar-Messvorrichtung nach einem der Ansprüche 11 bis 14 vermessen wird, wobei aus dem zeitlichen Verhalten auf Unregelmäßigkeiten geschlossen wird.
